# EUROPÄISCHE PATENTSCHRIFT

(11) **EP 3 453 654 B1**
(45) Veröffentlichungstag und Bekanntmachung des Hinweises auf die Patenterteilung: **07.06.2023**
(21) Anmeldenummer: 18193286.4
(22) Anmeldetag: 07.09.2018
(51) Int. Cl.: B65G 57/11, B65B 35/50

(54) **VERFAHREN UND VORRICHTUNG ZUM GRUPPIERTEN ANORDNEN UND AUSRICHTEN UND VERPACKEN VON INDIVIDUELLEN LEBENSMITTEL-PRODUKTEN**
METHOD AND DEVICE FOR GROUPED ARRANGING AND ORIENTING AND PACKAGING OF INDIVIDUAL FOOD PRODUCTS
PROCÉDÉ ET DISPOSITIF DE POSITIONNEMENT, ET D'ALIGNEMENT, ET D'EMBALLAGE GROUPÉS DES DENRÉES ALIMENTAIRES INDIVIDUELLES

(30) Priorität: 08.09.2017 DE 102017120823
(43) Veröffentlichungstag der Anmeldung: 13.03.2019
(73) Patentinhaber: VEMAG Maschinenbau GmbH, 27283 Verden/Aller (DE)
(72) Erfinder: Flammann, Uwe, 27308 Kirchlinteln (DE)
(74) Vertreter: Eisenführ Speiser

(56) Entgegenhaltungen:
- EP-A2- 0 082 123
- WO-A1-2007/050146
- DE-A1- 1 956 474
- US-A- 3 866 741
- US-A- 5 088 912
- US-A- 5 271 709
- US-A- 5 339 942
- US-A1- 2006 131 131
- US-B1- 6 332 749

## Beschreibung

Die Erfindung betrifft ein Verfahren und eine Vorrichtung zum gruppierten Anordnen und Ausrichten und Verpacken von individuellen Lebensmittel-Produkten, insbesondere Patty-Stapel.

Derartige Verfahren und Vorrichtungen zum gruppierten Anordnen von Lebensmittel- Produkten sind im Stand der Technik bekannt. Bei den Lebensmittel-Produkten kann es sich beispielsweise um Pattys handeln. Unter einem Patty wird eine Frikadelle oder Bratling bzw. ein geformtes Produkt aus Fleisch und/oder vegetarischen Bestandteilen verstanden, zum Beispiel für Burger.

Eine Vorrichtung bzw. Verfahren ist aus EP 1 472 162 B1 bekannt. Einzelne Produkt-Portionen werden mittels eines sogenannten Aufreihbandes gefördert und an einer Übergabekante an ein sogenanntes Portionierband übergeben, auf dem die Portionen in verschiedenen Formaten abgelegt werden können. Nach der Ablage können die Produkte in Verpackungen abgelegt werden.

Eine Vorrichtung zum gruppierten Anordnen und Ausrichten von Lebensmittel-Produkten nach dem Oberbegriff des Anspruchs 7 sowie ein entsprechendes Verfahren zum gruppierten Anordnen und Ausrichten von Lebensmittel-Produkten sind aus US 2006/131131 A1 bekannt.

Weitere Vorrichtung bzw. Verfahren zum gruppierten Anordnen und Ausrichten von einzelnen Produkten mit einer Ausrichtvorrichtung sind aus EP 0 082 123 A2, US 5 271 709 A, WO 2007/050146 A1 und US 5 339 942 A bekannt.

Eine Vorrichtung zum Stapeln und Ausrichten einzelner Produkte ist aus US 5 339 942 A bekannt.

Generell besteht die Schwierigkeit, die Lebensmittel-Produkte möglichst genau auf einem Zuführ -oder Förderband zu platzieren und in einer genauen Anordnung zu positionieren.

Aufgabe der vorliegenden Erfindung ist es, ein Verfahren und eine Vorrichtung bereit zu stellen, mit denen Lebensmittel-Produkte, insbesondere gestapelte Produkte, insbesondere Patty-Stapel möglichst gut positioniert in Gruppen auf einem Zuführ- bzw. Förder - Band abgelegt werden können. Gemäß eines weiteren Aspektes ist die Aufgabe, ein Verfahren und eine Vorrichtung bereitzustellen, mit denen Lebensmittel-Produkte, insbesondere gestapelte Lebensmittel-Produkte anschließend nach der Anordnung auf einem Band in eine Verpackung übergeben werden können. Insbesondere ist auch Aufgabe der Erfindung, ein Verfahren und eine Vorrichtung anzugeben, mit denen mehrere Reihen gestapelter Produkte, insbesondere Patty-Stapel gruppiert werden und als Gruppe in eine vorbereitete Verpackung, insbesondere Nester eines Tiefziehers eingelegt werden, wobei vorzugsweise die Reihen dicht aneinander stehen und genug Platz zum Einwerfen in die Verpackung, insbesondere vorbereitete Nester vorhanden ist.

Die Erfindung löst die Aufgabe mit einem Verfahren gemäß Anspruch 1.

Die Erfindung löst die Aufgabe ferner mit einer Vorrichtung gemäß Anspruch 7.

Durch das erfindungsgemäße Verfahren beziehungsweise die erfindungsgemäße Vorrichtung lassen sich einzelne Produkte, insbesondere gestapelte Produkte wie Patty-Stapel besonders gut ausgerichtet in Gruppen in verschiedenen Formaten auf einem Transportband, erfindungsgemäß dem so genannten zweiten Zuführband positionieren. Anschließend können die ausgerichteten Produkte mittels des Zuführbandes zu einer Verpackung transportiert werden. Mittels der erfindungsgemäßen Ausricht-Maske, die vorzugsweise Abteile in Form von Ausnehmungen aufweist, werden die Produkte, insbesondere Produkt-Stapel präzise auf dem zweiten Zuführband angeordnet.

Gemäß dem erfindungsgemäßen Verfahren vollführt das zweite Zuführband eine kurze Rückbewegung, um die zuvor auf das Zuführband abgeworfenen Produkt-Stapel in Richtung und in Kontakt mit der Ausricht-Maske zu transportieren. Durch das Inkontaktbringen aufgrund einer kurzen Rückbewegung, werden die Produkte beziehungsweise Produkt-Stapel in eine oder sogar zwei Richtungen ausgerichtet, in einem Koordinatensystem also in X-Richtung und/oder Y-Richtung. Unter Rückbewegung wird eine mittels des zweiten Zuführbandes erzeugte Bewegung der Produkte in Y-Richtung entgegengesetzt zu der nachfolgenden Transportrichtung hin zur weiteren Verarbeitung oder zur Verpackung der Produkte verstanden, insbesondere also eine Bewegung weg von einer Verpackungsmaschine.

Hierzu kann die erfindungsgemäße Ausricht-Maske Abteile, vorzugsweise mehrere Abteile in bestimmten verschiedenen Formen aufweisen. Vorzugsweise haben die Abteile im Wesentlichen eine U-Form oder V-Form oder eine Form, die sich von außen nach innen - wie eine Bucht oder Einbuchtung - verjüngt. Durch die Transportbewegung des zweiten Transportbandes werden die Pattys in der sich verjüngenden Form der Abteile zunächst in die eine Richtung, durch die sich verjüngenden Flanken oder Wandungen und schließlich durch Anlage mit der Ausricht-Maske auch in eine weitere Richtung - mithin in X und Y-Richtung - besonders vorteilhaft ausgerichtet. Anschließend können die so ausgerichteten und insbesondere aufeinander gestapelten Produkte weitertransportiert werden, vorzugsweise in die entgegengesetzte Richtung, zu einer Verpackung bzw. Verpackungseinrichtung.

Das erfindungsgemäße Verfahren wird vorteilhaft weitergebildet durch die Schritte Nacheinander Zuführen mehrerer insbesondere gestapelter Produkte mittels des ersten Zuführbandes, Abwerfen der mehreren Produkte auf dem zweiten Zuführband an mehreren verschiedenen X-Positionen auf der X-Achse benachbart zu der Ausricht-Maske, die mehrere Abteile aufweist, die jeweils an verschiedenen X-Positionen entlang der X-Achse oder einer zu dieser parallelen Achse angeordnet sind, so dass die abgeworfenen Produkte eine Reihe von mehreren Produkten auf dem zweiten Zuführband bilden, Kurzes Transportieren der mehreren Produkte mittels des zweiten Zuführbandes entlang der Y-Achse in Richtung auf die Ausricht-Maske, so dass die Produkte mit der Ausricht-Maske mindestens teilweise in Kontakt kommen und wenigstens teilweise bezogen auf die X-Achse und/oder Y-Achse auf dem zweiten Zuführband ausgerichtet werden, Weiter - Transportieren der ausgerichteten Produkte in Richtung der Y-Achse, vorzugsweise unter Änderung der Bewegungsrichtung des zweiten Zuführbandes (Anspruch 3).

Das Verfahren wird ferner weitergebildet (mit den Mermalen des Anspruchs 4) dadurch, dass nacheinander mehrere insbesondere gestapelte Produkte in jeweils ein U-förmiges oder V-förmiges Abteil der Ausricht-Maske abgeworfen werden, sodass auf dem zweiten Zuführband die gestapelten Produkte in einem vorzugsweisee geringen Abstand zueinander angeordnet sind und eine Reihe bilden, kurze Rückbewegung der Reihe gestapelter Produkte in Richtung auf die Ausricht-Maske, wodurch die gestapelten Produkte in die Rundung der U-förmigen Abteile gefahren werden, um dort positionsgenau ausgerichtet zu werden, kurze Vorwärtsbewegung der ausgerichteten Reihe von gestapelten Produkten, Bildung einer weiteren Reihe gestapelter Produkte durch nacheinander Abwerfen in die Abteile der Ausricht-Maske, erneute kurze Rückbewegung der Produkte in Richtung auf die Ausricht-Maske, und zwar soweit, bis sich die erste zuvor ausgerichtete Reihe von Produkten gegen die weitere ebenfalls ausgerichtete Reihe von Produkten bewegt hat, sodass die beiden Reihen im Wesentlichen ohne Abstand zueinander sind, gegebenenfalls Bildung einer weiteren Reihe von gestapelten Produkten auf dem zweiten Zuführband und Ausrichten sowie benachbartes Anordnen der weiteren Reihe an den bereits zuvor dicht nebeneinander angeordneten Reihen, anschließend Verfahren einer ausgerichteten Gruppe von mehreren gestapelten Produkten. Insbesondere lassen sich vorteilhaft Gruppen von Produkten, insbesondere Produkt-Stapel auf dem zweiten Zuführband ausbilden. Eine Gruppe besteht insbesondere aus einer Vielzahl von gestapelten Produkten, die mehrere dicht aneinander angeordnete benachbarte Reihen aufweisen, z.B. eine 3 x 4 oder 2 x 4 oder anders zusammengesetzte Gruppe aus mehreren Reihen mit jeweils mehreren benachbarten gestapelten Produkten, wobei die gestapelten Produkte in einer Reihe beabstandet sind, während Reihen der gestapelten Produkte dicht aneinander stehen.

Das Verfahren wird vorteilhaft weitergebildet dadurch, dass eine Gruppe aus mehreren Patty-Stapeln entlang der X-Achse und mehreren Patty-Stapeln entlang der Y-Achse gebildet wird, Zuführen der Gruppe gestapelter Produkte zu einer Verpackung mittels des zweiten Zuführbandes in Richtung der Y-Achse, und Ablegen der Gruppe gestapelter Produkte in eine Verpackung. Die so gebildeten Gruppen von Produkten können durch weiteren Transport mittels des Zuführbandes einer Verpackung zugeführt werden, vorzugsweise einer Tiefzieh-Folien-Verpackung. Hierzu ist vorzugsweise eine Verpackungseinrichtung mit Produkt-Nestern ausgebildet. Nach der Bildung einer gewünschten Gruppe in einem gewünschten Format und Ablage in einer Verpackung kann der oben beschriebene Zyklus zur Bildung der Gruppe unter Anwendung der erfindungsgemäßen Ausricht-Maske beliebig oft wiederholt werden.

Die erfindungsgemäße Vorrichtung wird vorteilhaft dadurch weitergebildet, dass die Ausricht-Maske eine Vielzahl von Abteilen ausweist, welche vorzugsweise als Ausnehmungen ausgebildet und benachbart zueinander und/oder vorzugsweise in einer Reihe entlang einer Achse, insbesondere der X-Achse angeordnet sind. So können mehrere Produkte, insbesondere gestapelte Produkte in einer Reihe angeordnet und ausgerichtet werden, so dass die einzelnen gestapelten Produkte einen Abstand zueinander aufweisen. Die gestapelten Produkte können vorzugsweise in die Abteile hineingeworfen werden mittels des ersten Zuführbandes. Die Form der Abteile ist vorzugsweise eine sich von außen nach innen verjüngende Form, insbesondere - in einer Ansicht - eine U-Form oder V-Form.

Gemäß einer ebenfalls bevorzugten Ausführungsform ist vorgesehen, dass die Ausricht-Maske eine solche Höhe aufweist, dass mittels des ersten Zuführbandes in ein Abteil der Ausricht-Maske abgeworfene Produkte, insbesondere gestapelte Produkte wenigstens teilweise an eine Wand eines Abteils anschlagen und mit dieser in Kontakt bringbar sind. Herstellungstechnisch bevorzugt und besonders robust ist die Ausricht-Maske, wenn sie mehrere in einem Vollmaterial, insbesondere Kunststoff oder Metall ausgebildete Abteile aufweist.

Gemäß einer Weiterbildung wird vorgeschlagen dass die Ausricht-Maske mittels einer Halteeinrichtung an einem Rahmengestell, insbesondere des zweiten Zuführbandes angeordnet und vorzugsweise lösbar befestigt ist, die vorteilhaft so ausgebildet ist, dass die Ausricht-Maske in mehreren Stellungen in Richtung der X-Achse und/oder der Y-Achse fixierbar ist.

Schließlich wird die erfindungsgemäße Vorrichtung weitergebildet durch eine elektronische Steuerungseinrichtung, die eingerichtet und ausgebildet ist, Antriebe des ersten und zweiten Zuführbandes so zu steuern, dass eine Vielzahl verschiedener Gruppen von Produkten auf dem zweiten Zuführband ausgebildet und in die Verpackung transportiert werden können.

Weitere Vorteile für bevorzugte Ausführungsformen sind in den Unteransprüchen und der nachfolgenden Beschreibung dargelegt.

Die Erfindung wird nachstehend anhand eines bevorzugten Ausführungsbeispiels einer Vorrichtung und eines Verfahrens zum Ausrichten und Verpacken von Lebensmittel-Produkten beschrieben. Es zeigen:
- Fig. 1: ein Ausführungsbeispiel einer erfindungsgemäßen Vorrichtung zum gruppierten Anordnen und Ausrichten von Lebensmittel-Produkten, insbesondere Patty-Stapeln und zum Ausführen eines erfindungsgemäßen Verfahrens in einer perspektivischen Ansicht;
- Fig. 2: einen Ausschnitt der Vorrichtung gemäß Fig. 1 in einer weiteren perspektivischen Ansicht;
- Fig. 3: ein Ausführungsbeispiel einer erfindungsgemäßen Ausricht-Maske mit mehreren Abteilen in einer Seitenansicht;
- Fig. 4: die Ausricht-Maske gemäß Fig. 3 in einer Draufsicht;
- Fig. 5: ein Ausführungsbeispiel eines erfindungsgemäßen Verfahrens zum gruppierten Anordnen und Ausrichten von Lebensmittel-Produkten, insbesondere Patty-Stapel unter Anwendung einer erfindungsgemäßen Vorrichtung, in mehreren Phasen von Schritt 1 bis Schritt 10; und
- Fig. 6: eine weitere Darstellung des erfindungsgemäßen Verfahrens ähnlich Fig. 5

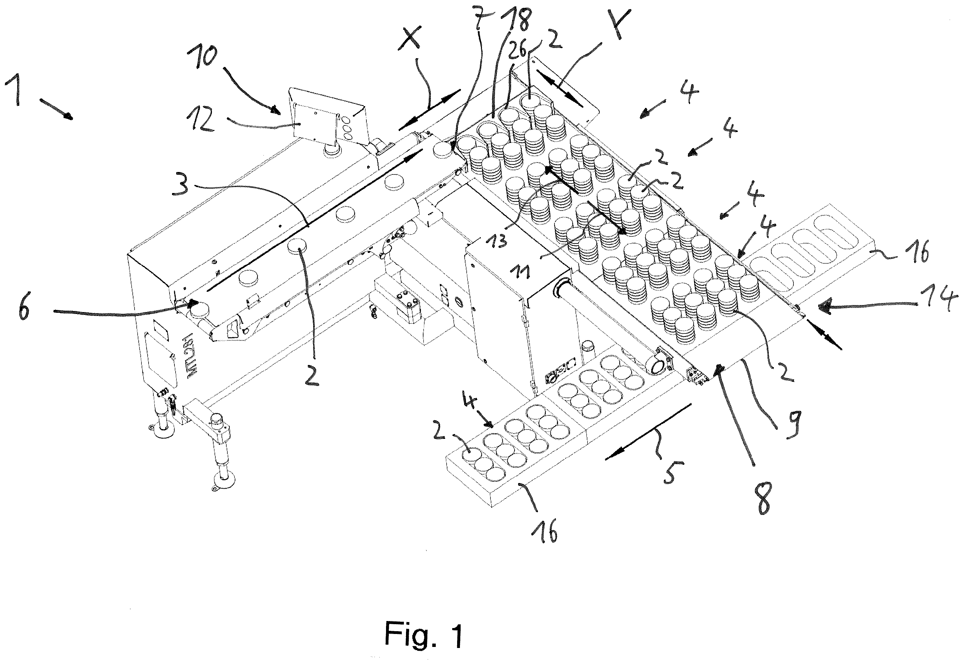

Die in Figur 1 gezeigte Vorrichtung 1 dient zum Anordnen und Ausrichten und Gruppieren von gestapelten Produkten 2, insbesondere Patty-Stapel in Gruppen 4. Die Vorrichtung 1 umfasst - zusätzlich zu weiteren Komponenten - ein erstes Zuführband 6 zum Transportieren der Produkte in Richtung einer ersten X-Achse und ein zweites Zuführband 8 zum Transportieren der Produkte 2 in Richtung einer zweiten Y-Achse. X-und Y-Achse sind im Ausführungsbeispiel bevorzugt rechtwinklig zueinander angeordnet; auch andere winklige Anordnungen der Achsen und der Zuführbänder 6, 8 zueinander sind möglich. Das erste Zuführband 6 könnte auch als X-Shuttle-Band, das zweite Zuführband 8 als Y-Shuttle-Band bezeichnet werden.

Das erste Zuführband 6 und das zweite Zuführband 8 sind Teil jeweils einer an sich bekannten Band-Fördereinrichtung mit einem motorisch angetriebenen umlaufenden Endlos-Band und sind jeweils als Rückzieh-Band ausgebildet, was, wie dem Fachmann bekannt ist, bedeutet, dass das in Transport- oder Förderrichtung des jeweiligen Zuführbandes 6, 8 gesehen hintere Ende vor und zurück bewegbar istin die jeweilige Förderrichtung, um die effektive Länge des Bandes variieren und das Produkt 2 oder eine Gruppe 4 von Produkten 2 von dem Band an verschiedenen Orten abwerfen zu können. Die Zuführbänder 6 und 8 weisen zu diesem Zweck neben dem Endlos-Band eine ebenfalls motorisch angetriebene Rückzieheinrichtung auf, mit der erreicht wird, den Ort der hinteren Abwurf-Kante 7 bzw. 9 am Ende der Förderbänder 6, 8 zu variieren. Die Zuführbänder 6, 8 sind in bekannter Weise an Maschinengestellen montiert.

Mittels einer Steuerungseinrichtung 10, die einen Monitor 12 und in nicht dargestellter Weise Bedieneinrichtungen, elektronische Speicher, einen Rechner sowie Sensoren und Anschlüsse und Leitungen aufweist, lassen sich die gesamte Vorrichtung 1, insbesondere auch die Zuführbänder 6, 8 steuern hinsichtlich beispielsweise der Fördergeschwindigkeit, der Förderrichtung sowie der jeweiligen effektiven Länge durch Variieren des Ortes der hinteren Abwurf-Kante 7 bzw. 9 am Ende der Förderbänder 6, 8.

Eine Verpackungsmaschine 14 in Form einer sogenannten Tiefziehmaschine, vereinfacht Tiefzieher genannt, ist unterhalb des Endbereichs des zweiten Zuführbandes 8 vorgesehen, derart dass Produkte 2, insbesondere Gruppen 4 aus Produkten, in eine Verpackung 16, insbesondere eine Tiefziehverpackung, abgegeben werden können. Die Verpackungsmachine 14 weist hierzu in bekannter Weise auf eine Einrichtung zum Zuführen leerer Verpackungen 16 mit beispielsweise einer Vielzahl von sogenannten Nestern, die in einer gewünschten Anordnung insbesondere zur Aufnahme einer Gruppe 4 von gestapelten Produkten 2 angeordnet sind, sowie zugehörige Antriebe, Einrichtungen zum Zuführen von Schalen, Folienverpackungen sowie gegebenenfalls eine Vakuumeinrichtung.

Gestapelte Produkte 2 sind mittels des Zuführbandes 6 in X-Richtung (Pfeil 3), in Y-Richtung mittels des zweiten Förderbandes 8 in Richtung auf die Verpackungsmaschine 14 und mittels dieser schließlich in X-Richtung in Richtung des Pfeils 5 transportierbar.

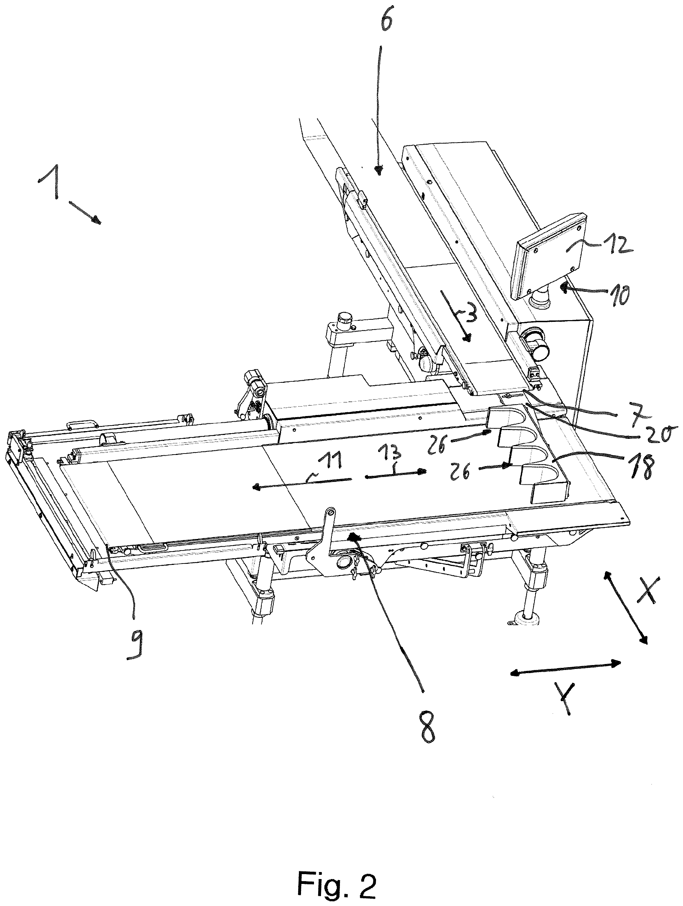

Wie Figur 2 zeigt, ist das erste Zuführband 6 zum Zuführen der Produkte 2 in X-Richtung im Wesentlichen seitlich und oberhalb von dem zweiten Zuführband 8 angeordnet, sodass Produkte 2, insbesondere Patty-Stapel, auf das zweite Zuführband 8 abgeworfen werden können. Dabei hängt die konkrete Flugbahn insbesondere von der Geschwindigkeit des Zuführbandes 6 in X-Richtung und der Höhendifferenz zwischen den Zuführbändern 2, 3 ab. Aufgrund der Ausbildung des Zuführbandes 6 als Rückzieh-Band können die Produkte 2 an verschiedenen Positionen, in dem X-Y Koordinatensystem an verschiedenen X-Positionen abgeworfen und so auf dem zweiten Zuführband 8 an verschiedenen Orten abgelegt werden. Je nach effektiver Länge und Position der Abwurf-Kante 7 kommen die Produkte 2 verschiedenen X-Positionen, das heißt quer zur Richtung entlang der Y-Achse auf dem Förderband 8 zu liegen.

Eine erfindungsgemäße Ausrichtvorrichtung in Form einer Ausricht-Maske 18 ist oberhalb von dem zweiten Zuführband 8 angeordnet und dient zum Ausrichten der Produkte 2 insbesondere gestapelter Produkte 2 auf dem zweiten Zuführband 8. Zweckmäßigerweise ist die Ausricht-Maske 18 unterhalb des ersten Zuführbandes 6 und damit auch unterhalb der in X-Richtung verfahrbaren Abwurf-Kante 7 angeordnet und vorzugsweise in Verlängerung der Förderbahn in Richtung 3 des ersten Zuführbandes 6.

Die Ausricht-Maske 18 ist im Ausführungsbeispiel ortsfest und starr mittels einer Haltereinrichtung 20 positioniert durch Montage an einem Maschinengestell oder einem Teil des ersten oder zweiten Zuführbandes 6, 8. In nicht gezeigter Weise könnte die Ausricht-Maske 18 aber alternativ auch beweglich ausgebildet sein und an einem anderen Ort oberhalb von dem zweiten Zuführband 8 angeordnet sein, beispielsweise auch so, dass sie in die Bewegungsbahn der Produkte 2 auf dem zweiten Zuführband 8 hinein beziehungsweise aus dieser heraus verfahrbar ausgebildet ist, insbesondere motorisch angetrieben, um so aus einer aktiven Ausricht-Stellung in eine passive Stellung gebracht werden kann und umgekehrt. Die Halteeinrichtung 20 ist, wie Figuren 2 bis 4 zeigen, mit einem Teil mit der Ausricht-Maske 18 verschraubt oder anderweitig befestigt und andererseits mittels Schraubverbindung 24 mit dem Maschinengestell des ersten Zuführbandes 6 verschraubt. Zu diesem Zweck ist die Halteeinrichtung 20 als flacher Körper, beispielsweise aus einem Blech ausgebildet und mit Schlitzen 22 oder Bohrungen versehen, um Schrauben durchführen und befestigen zu können.

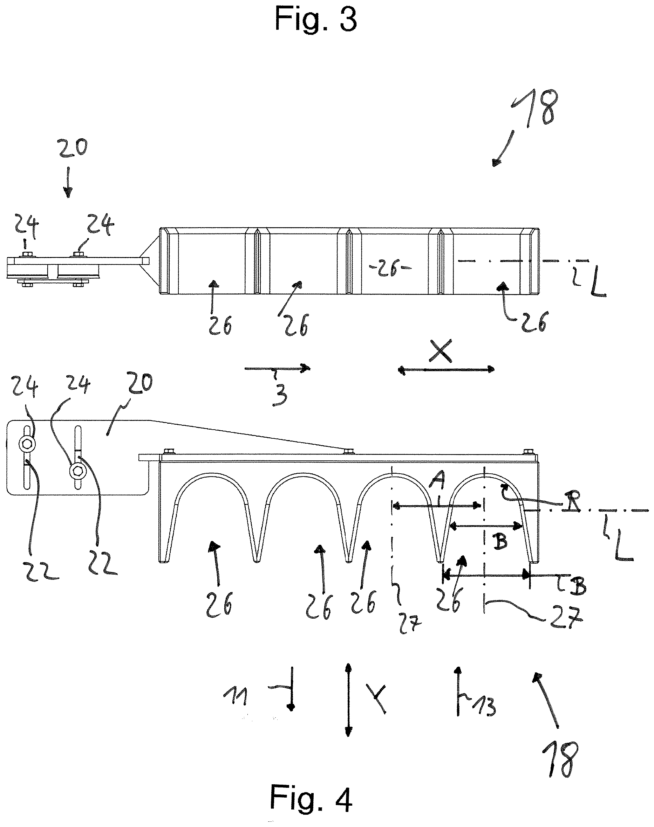

Die Ausricht-Maske 18 weist mehrere, im Ausführungsbeispiel vier Abteile 26 auf, die so ausgebildet sind, dass jeweils ein Abteil 26 mindestens ein Produkt 2, insbesondere mehrere gestapelte Produkte 2, insbesondere jeweils einen Patty-Stapel aufnehmen kann, sodass gestapelte Produkte 2 von dem ersten Zuführband 6 durch jeweils geeignete Positionierung der Abwurf-Kante 7 in ein Abteil 26 hinein oder in Relation zu einem Abteil 26 abgegeben, d.h. im Ausführungsbeispiel abgeworfen werden kann. Im gezeigten Ausführungsbeispiel die Abteile 26 als sich von außen nach innen verjüngende Ausnehmungen ausgebildet, bevorzugt insbesondere in einer Draufsicht erkennbar (Figur 4) in U-Form oder nicht gezeigter V-Form oder ähnlich.

Wie insbesondere die Figuren 3 und 4 gut veranschaulichen, verjüngt sich ein Abteil 26 (oder die Abteile 26) von außen nach innen, d.h. also in Y-Richtung betrachtet, genauer gesagt in Richtung des Pfeils 13. Ein Abteil 26 hat etwa die Form einer Einbuchtung und ist vorzugsweise im Wesentlichen symmetrisch ausgebildet, bezogen auf eine Mittelachse 27, die parallel zur Y, Achse angeordnet ist. Die Breite B eines Abteils 26, vergleiche Figur 4, ist also im äußeren Bereich maximal und verkleinert sich im weiteren Verlauf nach innen in das Abteil 26 hinein. Im Ausführungsbeispiel verjüngt sich ein Abteil 26 - weiter nach innengehend - zunächst gleichmäßig, und die Wandungen in diesem Bereich sind im wesentlichen eben und gegenüberliegende Wandungen sind schräg zueinander angeordnet. In einem inneren Bereich gehen die Wandungen dann in einen gekrümmten Bereich über, im Ausführungsbeispiel in einen Bereich R mit einer im wesentlichen zylindrischen Form. Dort hat die Wanderung also eine bestimmte Form, die angepasst ist an die Form der Produkte 2 bzw. an die Form mehrerer übereinander gestapelter Produkte 2, insbesondere gestapelter Pattys. Im Ausführungsbeispiel hat der zylindrische Bereich R also einen bestimmten Radius. Alternativ sind aber auch andere Radien und Formen möglich, beispielsweise andere Formen als eine zylindrische Form im Bereich R möglich, beispielsweise anders gekrümmte, beispielsweise elliptische Formen. Der Mittenabstand A zweier benachbarter Abteile 26 entspricht dem Abstand der Mittelachsen 27. Durch diesen Mittenabstand A wird der Abstand der ausgerichteten Produkte 2 auf dem zweiten Zuführband 8 im Wesentlichen festgelegt. Die Ausricht-Maske 18 hat eine Längsachse L, die in X-Richtung verläuft, vergleiche Figur 3 und 4. Die Abteile 26 bilden eine Reihe in Richtung der Längsachse L.

Die die Abteile 26 bildenden Ausnehmungen sind in einem Vollmaterial aus vorzugsweise Kunststoff oder Metall ausgebildet, vorzugsweise einem Kunststoff wie beispielsweise PTFE (Teflon). Alternativ könnte die Ausricht-Maske 18 als eine Gitterstruktur mit mehreren darin ausgebildeten Abteilen 26 zur Aufnahme gestapelter Produkte 2 ausgebildet sein.

Wie Figur 1 veranschaulicht, können vier vorzugsweise gestapelte Produkte 2 in den vier Abteilen 26 der Ausricht-Maske angeordnet und mit dieser ausgerichtet werden (wie noch weiter erläutert wird). Die Produkte 2 sind somit in der Ausricht-Maske in einer Viererreihe oder Vierer-Folge anordenbar; die Zahl der Abteile 26 in der Ausricht-Maske 18 lässt sich je nach Wunsch beliebig variieren.

Die Ausricht-Maske 18 hat eine solche Höhe, dass mittels des ersten Zuführbandes 6 in ein Abteil 26 der Ausricht-Maske 18 abgeworfene Produkte, insbesondere gestapelte Produkte 2 wenigstens teilweise an eine Wand eines Abteils 26 anschlagen können und mit dieser in Kontakt bringbar sind bzw. eine solche Höhe, dass die Ausricht-Maske mindestens der Höhe der gestapelten Produkte 2 entspricht. Gleichzeitig ist die Größe der Abteile 26 an die Form der Produkte 2 angepasst und vorzugsweise etwas größer als diese. Aufgrund der sich vorzugsweise verjüngenden Form der Abteile 26 füllen die Produkte 2 die Abteile 26 je nach Lage relativ zur Ausricht-Maske 18 mehr oder weniger aus, vgl. Figur 1. Die Abteile 26 haben vorzugsweise den gleichen Mittenabstand wie die Formnester des Tiefziehers. Der Auslauf der U-förmigen Abteile 26 verjüngt sich nach innen bzw. erweitert sich nach außen. In den erweiterten äußeren Bereich wird ein Produkt 2 bzw. Patty-Stapel eingeworfen, damit er möglichst nicht oder nur minimal an die Wandung des Abteils 26 stößt. In nicht dargestellter Weise kann die Ausricht-Maske 18 mittels der Halteeinrichtung 20 an verschiedenen X- bzw. Y-Positionen an dem Maschinengestell bzw. den Zuführbändern 6, 8 positioniert werden, je nach Anwendungsfall.

Das erfindungsgemäße Verfahren bzw. die Vorrichtung 1 und dessen Funktionsweise nebst Verpackungsmaschine 14, vorzugsweise einem Tiefzieher, wird nachfolgend weiter erläutert:
Das Verfahren wird nachfolgend anhand der Anordnung und Ausrichtung gestapelter Produkte 2, insbesondere eines Patty-Stapels, erläutert, jedoch könnten auch andere bzw. auch nicht gestapelte einzelne Lebensmittel-Produkte erfindungsgemäß angeordnet, ausgerichtet und verpackt werden.

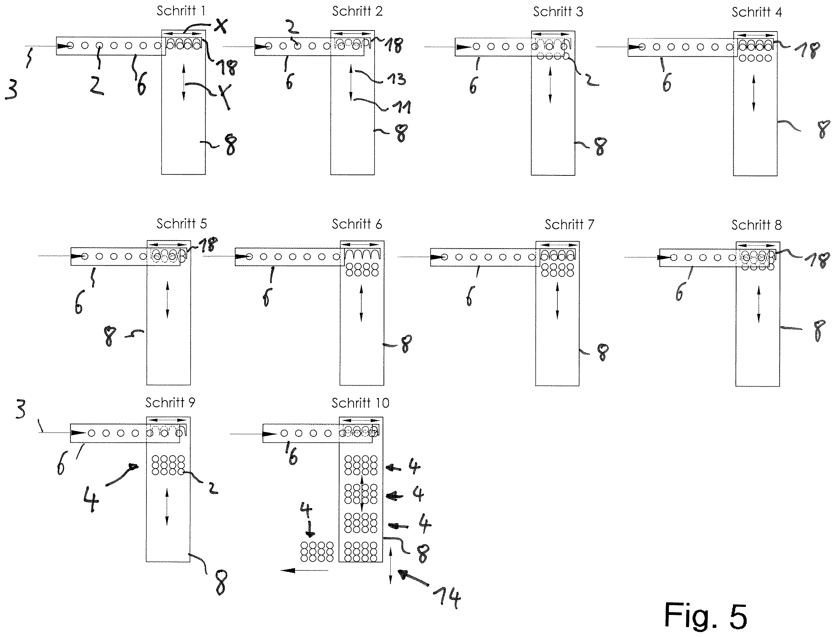

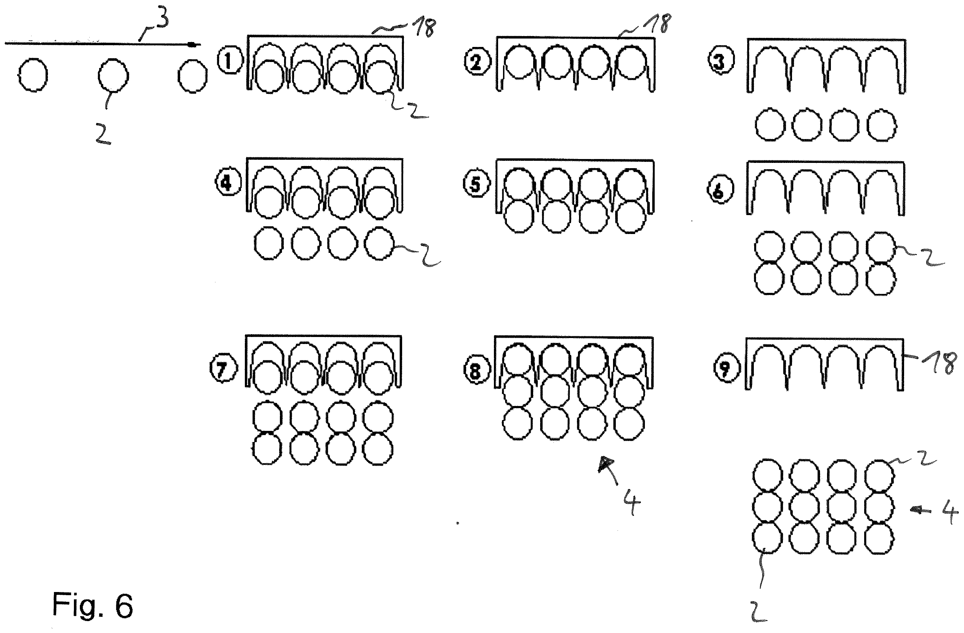

Auch mit Bezugnahme auf insbesondere die Figur 5, die den Verfahrensablauf in einer Reihe von Schritten (1 - 10) veranschaulicht, und auch mit Bezugnahme auf die Figur 6, wird ein erstes insbesondere gestapeltes Produkt 2 mittels des ersten Zuführbandes 6 in X-Richtung in Richtung des Pfeils 3 transportiert und zugeführt.

Bei Schritt 1 wird das gestapelte Produkt 2 dann in ein Abteil 26 der Ausricht-Maske 18 abgeworfen, und zwar in den äußeren vorderen breiteren Bereich eines Abteils 26. Alternativ könnte das Produkt 2 auch in Y-Richtung betrachtet vor einem Abteil 26 abgeworfen werden auf das zweite Zuführband 8. Durch erneutes Zuführen eines weiteren gestapelten Produkts 2 wird ein weiteres Produkt 2 einem Abteil 26 zugeordnet, im Ausführungsbeispiel das Abteil 26 indessen äußeren Bereich gefüllt, dann ein weiteres Abteil 26 und schließlich das vierte Abteil 26. Vorzugsweise wird zunächst, bezogen auf die Förderrichtung 3, das hinterste Abteil 26 gefüllt, dann sukzessive durch Zurückziehen der Abwurf-Kante 7 die weiteren Abteile 26. Die Produkte 2 werden also an jeweils verschiedenen Positionen auf der X-Achse auf dem zweiten Zuführband 8 abgeworfen und dort abgelegt. Die gestapelten Produkte 2 sind nach dem Abwerfen nicht notwendigerweise in ihrer genauen Position, weswegen sie mittels der Ausricht-Maske 18 ausgerichtet werden, wie nachfolgend weiter beschrieben wird.

In einem weiteren Schritt (Schritt 2) wird das bzw. werden die zuvor abgeworfenen Produkte 2 durch Einschalten und Beschleunigen des zweiten Zuführbandes 8 entlang der Y-Achse in Richtung auf die Ausricht-Maske 18 transportiert und so in die Abteile 26 der Ausricht-Maske 18 hineintransportiert bzw. hineingefahren, um die Produkte 2 dort auszurichten. Erfindungsgemäß erfolgt dieser Transport durch eine Bewegung in Richtung des Pfeils 13, also durch eine Rückbewegung, vergleiche auch die diesbezüglichen weiteren Beschreibungen im nachfolgenden. Die Ausrichtung geschieht aufgrund der sich verjüngenden Form der Abteile 26 bzw. deren Wandungen oder Begrenzungsflächen. Die Produkte 2, insbesondere die gestapelten Produkte, werden so vorzugsweise zum einen in Y-Richtung ausgerichtet, da sie im Idealfall am tiefsten Punkt der Abteile 26 zur Anlage kommen, oder aber auch durch die seitlichen Wandungen, und/oder werden in X-Richtung ausgerichtet aufgrund der sich verjüngenden Form. Die Ausricht-Maske 18, insbesondere die Abteile 26 sind so ausgebildet, dass die gestapelten Produkte 2 möglichst gleichmäßig beabstandet zueinander in einer Reihe in X-Richtung auf dem zweiten Zuführband 8 angeordnet sind. Erfindungsgemäß erfolgt der Ausricht - Transport durch kurze Rück- Bewegung in Y-Richtung weg von der Verpackungsmaschine 14 in Richtung auf die Ausricht-Maske 18; insoweit erfolgt eine Rück-Bewegung Unter Rückbewegung wird eine mittels des zweiten Zuführbandes erzeugte Bewegung der Produkte in Y-Richtung entgegengesetzt zu der nachfolgenden Transportrichtung zur weiteren Verarbeitung oder zur Verpackung der Produkte verstanden, insbesondere also eine Bewegung weg von einer Verpackungsmaschine 14. Unter Vorwärtsbewegung wird eine Bewegung bzw. ein Transport in die andere Richtung entlang der Y-Achse verstanden, also in Richtung hin zu einer weiteren Verarbeitung oder zu einer Verpackungsmaschine 14. Die Vorwärtsbewegung ist durch Pfeil 11, z.B. in Figur 1, 2, 4 oder 5 veranschaulicht, die Rückbewegung durch Pfeil 13.

Anschließend werden die so ausgerichteten Produkte 2 weitertransportiert mittels des zweiten Zuführbandes 8 in Richtung der Y-Achse, unter Änderung der vorherigen Bewegungsrichtung, nun in einer Vorwärtsbewegung in Richtung auf die Verpackungsmaschine 14 weg von der Ausricht-Maske 18, siehe Schritt 3. Die ausgerichteten Produkte, die in einer Reihe stehen und einen gewissen Abstand zueinander aufweisen von beispielsweise 1 - 4 cm je nach Dimensionierung der Ausricht-Maske 18, werden also ein Stück in Y-Richtung mittels des zweiten Zuführbandes 8 transportiert.

Dann wird das zweite Transportband 8 vorübergehend angehalten. In diesem Zustand folgt, gemäß Schritt 4, eine wiederholte, erneute Füllung der Abteile 26 der Ausricht-Maske 18, wie zuvor bei Schritt 1 beschrieben, oder eine Zuordnung der Produkte 2 in Y Richtung betrachtet vor den Abteilen 26. So wird eine nächste Viererreihe von Produkten 2 gebildet.

In einem nächsten Schritt 5 wird das zweite Zuführband 8 für einen kurzen Rückhub, also eine kurze Rückbewegung in Richtung (des Pfeiles 13) auf die Ausricht-Maske 18 eingeschaltet, sodass die zweite Reihe von Produkten 2 mittels der Ausricht-Maske in X- und Y-Richtung ausgerichtet wird. Die Rückbewegung wird vorzugsweise so vorgenommen, dass gleichzeitig die Ausrichtung erfolgt und die zuvor ausgerichtete erste Reihe von Produkten dicht an die zweite Viererreihe von Produkten 2 herangefahren wird, sodass die jeweils benachbarten gestapelten Produkte 2 dicht aneinander angeordnet sind und eventuell in Kontakt kommen. Die erste Viererreihe wird also gegen die zweite Viererreihe geschoben; die als zweites erzeugte Viererreihe wird gleichzeitig ausgerichtet.

Gemäß Schritt 6 werden dann die zwei benachbarten erzeugten Produkt-Reihen transportiert mittels des zweiten Zuführbandes in Y-Richtung in Richtung (des Pfeils 11) auf die Verpackungsmaschine 14. Die Ausricht-Maske 18 wird / ist mit ihren Abteilen 26 also wieder frei.

Gemäß Schritt 7 erfolgt eine erneute Befüllung der Abteile 26 der Ausricht-Maske 18 mit einzelnen gestapelten Produkten 2 mithilfe des ersten Zuführbandes 6.

Bei Schritt 8 wird nun das zweite Transportband 8 erneut eingeschaltet, und die zuletzt gebildete Reihe innerhalb der Abteile 26 der Ausricht-Maske 18 wird durch die kurze Rückbewegung (in Richtung des Pfeils 13) ausgerichtet. Gleichzeitig werden die zwei Reihen zuvor ausgerichteter gestapelter Produkte 2 in Y-Richtung in Richtung auf die zuletzt ausgerichtete Reihe von Produkten 2 gefahren, bis sie dicht aneinander angeordnet sind und auch gegebenenfalls miteinander in Kontakt kommen. Nun ist also eine Gruppe 4 aus drei dicht aneinander angeordneten Reihen mit jeweils etwas beabstandeten gestapelten Produkten 2 auf dem zweiten Zuführband 2 gebildet. Diese Gruppe 4 ist gut in Schritt 9, Figur 5, aber auch als eine Gruppe aus insgesamt zwölf gestapelten Produkten 2 in Figur 1 erkennbar.

Der zuvor beschriebene Prozess der Bildung einzelner Reihen aus Produkten 4 und der Ausrichtung mit der Ausricht-Maske sowie die Bildung von benachbarten Reihen, die eine Gruppe 4, beispielsweise eine 3 x 4-Gruppe bilden können, kann sich anschließend beliebig oft wiederholen, wie bei Schritt 9 bzw. 10 dargestellt.

In nicht dargestellter Weise könnten statt einer Reihe aus vier gestapelten Produkten auch drei, fünf oder eine beliebig andere Zahl von Produkten in einer Reihe angeordnet werden. Genauso kann in nicht dargestellter Weise eine Gruppe aus zwei, drei, vier oder vielen Reihen gebildet werden.

Eine gebildete Gruppe, beispielsweise die gezeigte 4 x 3-Gruppe 4, wird dann anschließend in Y-Richtung mittels des zweiten Zuführbandes 8 ( in Richtung des Pfeils 11) zu der Verpackungsmaschine 14 oberhalb von der Verpackung 16, einer Tiefziehverpackung, transportiert. Durch Rückziehen der Rückzieh-Kante 9 des zweiten Zuführbandes 8 fallen die zuvor ausgerichteten Produkte einer Gruppe 4, im Beispiel der 4 x 3-Gruppe in die Verpackung 16, genauer gesagt die Nester der Tiefziehverpackung.

Durch einen Rückhub der Rückzieh-Kante 9 wird also die gesamte Gruppe 4 in eine Verpackung 16 abgelegt.

Erfindungsgemäß lassen sich also beliebige Formate von gruppierten Produkten, insbesondere gestapelter Produkten 2, bilden. Die mittels der Ausricht-Maske 18 ausgerichteten Produkte 2 sind etwas beabstandet voneinander, während die Verfahrensführung zulässt, die jeweils benachbarten Reihen dicht aneinander zu fahren; alternativ könnten diese jedoch auch in einen gewissen Abstand zueinander gebracht werden, je nachdem, welches konkrete Format in der Verpackung 16 gewünscht ist.

## Patentansprüche

1. Verfahren zum gruppierten Anordnen und Ausrichten von individuellen Lebensmittel-Produkten (2) mit den Schritten:
- Zuführen eines Lebensmittel- Produktes (2), mittels eines ersten Zuführbandes (6) zum Transportieren der Produkte (2) in Richtung einer X- Achse,
- Abwerfen des Produktes (2) von dem ersten Zuführband (6) an einer Position auf der X-Achse auf ein zweites Zuführband (8) zum Transportieren der Produkte in Richtung einer Y-Achse,
- Transportieren des Produktes (2) mittels des zweiten Zuführbandes (8) entlang der Y-Achse in Richtung auf eine oberhalb des zweiten Zuführbandes (8) angeordnete Ausricht-Maske (18), wobei das zweite Zuführband (8) zum Transport der Produkte in Richtung auf die Ausricht-Maske (18) eine kurze Rückbewegung in Richtung auf die Ausricht-Maske (18) ausführt und im Anschluss daran eine Vorwärtsbewegung in die entgegengesetzte Richtung und in Richtung der Y-Achse ausführt,
wobei die Ausrichtmaske so ausgebildet und eingerichtet ist, dass das Produkt (2) mit der Ausricht-Maske (18) in Kontakt kommen und wenigstens teilweise bezogen auf die X-Achse und/oder Y-Achse auf dem zweiten Zuführband (8), in einem Koordinatensystem also in X-Richtung und/oder Y-Richtung. ausgerichtet werden, wobei die X-Richtung eine erste Richtung ist und die Y-Richtung eine zweite Richtung ist,
- Weiter Transportieren des ausgerichteten Produktes (2) mittels des zweiten Zuführbandes in Richtung der Y-Achse.

2. Verfahren nach Anspruch 1,
wobei die Lebensmittelprodukte (2), welche durch das erste Zuführband (6) in Richtung einer X- Achse transportiert werden, um sie von dem ersten Zuführband (6) auf ein zweites Zuführband (8) abzuwerfen und auf diesem wenigstens teilweise bezogen auf die X-Achse und/oder Y-Achse auszurichten, gestapelte Produkte (2) wie Patty-Stapel sind.

3. Verfahren nach Anspruch 1 oder 2, mit den Schritten
Nacheinander Zuführen mehrerer Produkte (2) mittels des ersten Zuführbandes (6), Abwerfen der mehreren Produkte (2) auf dem zweiten Zuführband (8) an mehreren verschiedenen X-Positionen auf der X-Achse benachbart zu der Ausricht-Maske (18), die mehrere Abteile (26) aufweist, die jeweils an verschiedenen X-Positionen entlang der X-Achse oder einer zu dieser parallelen Achse angeordnet sind, so dass die abgeworfenen Produkte (2) eine Reihe von mehreren Produkten (2) auf dem zweiten Zuführband (8) bilden,
Kurzes Transportieren der mehreren Produkte (2) mittels des zweiten Zuführbandes entlang der Y-Achse in Richtung auf die Ausricht-Maske (18), sodass die Produkte (2) mit derAusricht-Maske (18) mindestens teilweise in Kontakt kommen und wenigstens teilweise bezogen auf die X-Achse und/oder Y-Achse auf dem zweiten Zuführband (8) ausgerichtet werden,
Weiter - Transportieren der ausgerichteten Produkte (2) in Richtung der Y-Achse, vorzugsweise unter Änderung der Bewegungsrichtung des zweiten Zuführbandes (8).

4. Verfahren nach mindestens einem der vorstehenden Ansprüche,
**dadurch gekennzeichnet, dass**
nacheinander mehrere gestapelte Produkte (2) in jeweils ein U-förmiges Abteil (26) der Ausricht-Maske (18) abgeworfen werden, sodass auf dem zweiten Zuführband (8) die gestapelten Produkte (2) in einem Abstand zueinander angeordnet sind und eine Reihe bilden,
- kurze Rückbewegung der Reihe gestapelter Produkte (2) in Richtung auf die Ausricht-Maske (18), wodurch die gestapelten Produkte (2) in die Rundung der U-förmigen Abteile (26) gefahren werden, um dort positionsgenau ausgerichtet zu werden,
- kurze Vorwärtsbewegung der ausgerichteten Reihe von gestapelten Produkten (2),
- Bildung einer weiteren Reihe gestapelter Produkte (2) durch nacheinander Abwerfen in die Abteile (26) der Ausricht-Maske (18),
- erneute kurze Rückbewegung der Produkte (2) in Richtung auf die Ausricht-Maske (18), und zwar soweit, bis sich die erste zuvor ausgerichtete Reihe von Produkten (2) gegen die weitere ebenfalls ausgerichtete Reihe von Produkten (2) bewegt hat, sodass die beiden Reihen im Wesentlichen ohne Abstand zueinander sind,
- gegebenenfalls Bildung einer weiteren Reihe von gestapelten Produkten (2) auf dem zweiten Zuführband (8) und Ausrichten sowie benachbartes Anordnen der weiteren Reihe an den bereits zuvor dicht nebeneinander angeordneten Reihen,
- anschließend Verfahren einer ausgerichteten Gruppe (4) von mehreren gestapelten Produkten (2).

5. Verfahren nach mindestens einem der vorstehenden Ansprüche,
**dadurch gekennzeichnet, dass** eine erste Gruppe (4) aus mehreren dicht beabstandeten Reihen hergestellt wird,
Transportieren der Gruppe (4) in Y-Richtung mittels des zweiten Zuführbandes (8), Herstellen einer weiteren Gruppe (4) aus Produkten (2) auf dem zweiten Zuführband (8), die in einem Abstand zu der ersten zuvor gebildeten Gruppe (4) auf dem Y-Band angeordnet ist,
gegebenenfalls weiteres Bilden von weiteren Gruppen (4) aus Produkten (2), die in mehreren dicht aneinander angeordneten Reihen von Produkten (2) auf dem zweiten Zuführband (8) gebildet sind.

6. Verfahren nach mindestens einem der vorstehenden Ansprüche,
**gekennzeichnet durch**
Zuführen einer Gruppe (4) gestapelter Produkte (2) zu einer Verpackung (16) mittels des zweiten Zuführbandes (8) in Richtung der Y-Achse, und
Ablegen der Gruppe (4) gestapelter Produkte (2) in eine Verpackung (16).

7. Vorrichtung (1) zum gruppierten Anordnen und Ausrichten von Lebensmittel-Produkten (2) mit:
- einem ersten Zuführband (6) zum Zuführen einzelner Lebensmittel- Produkte (2) in eine erste Bewegungsrichtung in Richtung einer X-Achse und zum Abwerfen von Produkten (2) auf ein zweites Zuführband (8),
- einem zweiten Zuführband (8) zum Zuführen aufgenommener Lebensmittel- Produkte (2) in eine zweite Bewegungsrichtung entlang einer Y-Achse, und
- einer elektronischen Steuerungseinrichtung (10), die eingerichtet und ausgebildet ist, Antriebe des ersten und zweiten Zuführbandes (8) so zu steuern, dass eine Vielzahl verschiedener Gruppen (4) von Produkten (2) auf dem zweiten Zuführband (8) ausgebildet und in die Verpackung (16) transportiert werden können,
**dadurch gekennzeichnet, dass**
- die Vorrichtung eine Ausricht-Maske (18) aufweist, welche oberhalb von dem zweiten Zuführband (8) angeordnet ist und so eingerichtet und ausgebildet ist, dass Produkte (2) von dem zweiten Zuführband (8) in mindestens ein Abteil (26) der Ausricht-Maske (18) eingebracht und auf dem zweiten Zuführband (8) ausgerichtet werden können, und
- die elektronische Steuerungseinrichtung (10) eingerichtet und ausgebildet ist, Antriebe des ersten und zweiten Zuführbandes (6, 8) nach dem Verfahren des Anspruchs 1 zu steuern.

8. Vorrichtung (1) nach Anspruch 7,
**dadurch gekennzeichnet, dass** die Ausricht-Maske (18) eine Vielzahl von Abteilen (26) ausweist.

9. Vorrichtung (1) nach Anspruch 7,
**dadurch gekennzeichnet, dass** die Ausricht-Maske (18) mehrere Abteile (26) aufweist, die eine sich von außen nach innen verjüngende Form der Flanken oder Wandungen, welche in einer Ansicht eine U-Form oder V-Form ausbilden, aufweisen.

10. Vorrichtung (1) nach Anspruch 9,
**dadurch gekennzeichnet, dass** mehrere Abteile (26) im Wesentlichen in einer Reihe in Richtung der X-Achse benachbart zueinander angeordnet sind.

11. Vorrichtung (1) nach mindestens einem der vorstehenden Ansprüche,
**dadurch gekennzeichnet, dass** die Ausricht-Maske (18) eine solche Höhe aufweist, dass mittels des ersten Zuführbandes (6) in ein Abteil der Ausricht-Maske (18) abgeworfene Produkte (2) wenigstens teilweise an eine Wand eines Abteils (26) anschlagen und mit dieser in Kontakt bringbar sind.

12. Vorrichtung (1) nach mindestens einen der vorstehenden Ansprüche,
**dadurch gekennzeichnet, dass** die Ausricht-Maske (18) mehrere in einem Vollmaterial ausgebildete Abteile (26) aufweist.

13. Vorrichtung (1) nach mindestens einem der vorstehenden Ansprüche,
**dadurch gekennzeichnet, dass** die Ausricht-Maske (18) mittels einer Halteeinrichtung (20) an einem Rahmengestell des Zuführbandes (6), (8) angeordnet und lösbar befestigt ist.

14. Vorrichtung (1) nach Anspruch 13,
**dadurch gekennzeichnet, dass** die Halteeinrichtung (20) so ausgebildet ist, dass die Ausricht-Maske (18) in mehreren Stellungen in Richtung der X-Achse und/oder der Y-Achse fixierbar ist.

15. Vorrichtung (1) nach mindestens einem der vorstehenden Ansprüche,
**gekennzeichnet durch** eine elektronische Steuerungseinrichtung (10), die eingerichtet und ausgebildet ist, Antriebe des ersten und zweiten Zuführbandes (8) so zu steuern, dass eine Vielzahl verschiedener Gruppen (4) von Produkten (2) auf dem zweiten Zuführband (8) ausgebildet und in die Verpackung (16) transportiert werden können.

## Claims

1. A method for the grouped arrangement and orientation of individual food products (2) comprising the steps:
- feeding a food product (2), by means of a first feed belt (6) for transporting the products (2) in the direction of a first X-axis,
- ejecting the product (2) from the first feed belt (6) at a position on the X-axis on to a second feed belt (8) for transporting the products in the direction of a second Y-axis,
- transporting the product by means of the second feed belt (8) along the Y-axis in the direction of an orientation mask (18) which is arranged above the second feed belt (8) and which is so designed and adapted that the product (2), in particular the stacked products (2) come into contact with the orientation mask (18) and are at least partially oriented with respect to the X-axis and/or Y-axis on the second feed belt (8), and
- further transporting the oriented product (2) by means of the second feed belt in the direction of the Y-axis, preferably with a change in the direction of movement of the second feed belt (8),
**characterised in that** the second feed belt (8) for transporting the products in the direction of the orientation mask (18) performs a preferably brief rearward movement in the direction of the orientation mask (18) and subsequently thereto a forward movement in the opposite direction and in the direction of the Y-axis.

2. A method as set forth in claim 1,
wherein the food products (2), which are transported by means of the first feed belt (6) in the direction of a first X-axis, for ejecting the products (2) from the first feed belt (6) on to a second feed belt (8) and at least partially oriented with respect to the X-axis and/or Y-axis on the second feed belt (8), are stacked products (2) as patty-stacks.

3. A method as set forth in claim 1 or 2 comprising the steps:
successively feeding a plurality of products (2) by means of the first feed belt (6),
ejecting the plurality of products (2) on the second feed belt (8) at a plurality of different X-positions on the X-axis in adjacent relationship to the orientation mask (18) which has a plurality of compartments (26), which are respectively arranged at various X-positions along the X-axis or an axis parallel thereto so that the ejected products (2) form a row of a plurality of products (2) on the second feed belt (8),
briefly transporting the plurality of products (2) by means of the second feed belt along the Y-axis in the direction of the orientation mask (18) so that the products (2) at least partially come into contact with the orientation mask (18) and are at least partially oriented with respect to the X-axis and/or the Y-axis on the second feed belt (8), and
further transporting the oriented products (2) in the direction of the Y-axis, preferably with a change in the direction of movement of the second feed belt (8).

4. A method as set forth in at least one of the preceding claims
**characterised in that**
a plurality of stacked products (2) are successively ejected into a respective U-shaped compartment (26) of the orientation mask (18) so that the stacked products (2) are arranged at a preferably small spacing relative to each other and form a row on the second feed belt (8),
- brief rearward movement of the row of stacked products (2) in the direction of the orientation mask (18) whereby the stacked products (2) are moved into the rounded configuration of the U-shaped compartments (26) to be oriented in accurately positioned relationship there,
- brief forward movement of the oriented row of stacked products (2),
- forming a further row of stacked products (2) by successive ejection into the compartments (26) of the orientation mask (18),
- renewed brief rearward movement of the products (2) in the direction of the orientation mask (18), more specifically until the first previously oriented row of products (2) has moved against the further also oriented row of products (2) so that the two rows are substantially without a spacing relative to each other,
- optionally forming a further row of stacked products (2) on the second feed belt (8) and orienting and adjacently arranging the further row at the rows already previously arranged in closely adjoining relationship, and
- then displacing an oriented group (4) of a plurality of stacked products (2).

5. A method as set forth in at least one of the preceding claims
**characterised in that** a first group (4) is produced from a plurality of closely spaced rows,
transporting the group (4) in the Y-direction by means of the second feed belt (8),
producing a further group (4) of products (2) on the second feed belt (8), which is arranged at a spacing relative to the first previously first group (4) on the Y-belt, and
optionally further forming further groups (4) of products (2) which are formed in a plurality of closely adjacently arranged rows of products (2) on the second feed belt (8).

6. A method as set forth in at least one of the preceding claims
**characterised by**
feeding a group (4) of stacked products (2) to a packaging (16) by means of the second feed belt (8) in the direction of the Y-axis, and
depositing the group (4) of stacked products (2) in a packaging (16).

7. Apparatus (1) for the grouped arrangement and orientation of food products (2) comprising:
- a first feed belt (6) for feeding individual food products (2), in a first direction of movement in the direction of an X-axis and for depositing, in particular ejecting products (2), on to a second feed belt (8),
- a second feed belt (8) for feeding received food products (2), in a second direction of movement along a Y-axis,
- an electronic control device (10) which is designed and adapted to control drives of the first and second feed belts (8) in such a way that a plurality of different groups (4) of products (2) can be formed on the second feed belt (8) and transported into the packaging (16),
**characterised in that**
- the apparatus has an orientation mask (18) which is arranged above the second feed belt (8) and which is so designed and adapted that products (2), from the first feed belt (6) and/or the second feed belt (8) can be introduced into at least one compartment (26) of the orientation mask (18) and oriented on the second feed belt (8), and
- the electronic control device (10) is configured and adapted to control the drives of the first and second feed belt (6, 8) according to the method of claim 1.

8. Apparatus (1) as set forth in claim 7
**characterised in that** the orientation mask (18) has a plurality of compartments (26) which are preferably in the form of recesses and are arranged in mutually adjacent relationship and/or are preferably arranged in a row along an axis, in particular the X-axis.

9. Apparatus (1) as set forth in at least one of the preceding claims,
**characterised in that** the orientation mask (18) has at least one compartment (26), preferably a plurality of compartments (26), which are of a shape which narrows from the outside inwardly, in particular of a U-shaped configuration or V-shaped configuration in a plan view.

10. Apparatus (1) as set forth in claim 9
**characterised in that** a plurality of compartments (26) are arranged substantially in a row in the direction of the X-axis in mutually adjacent relationship.

11. Apparatus (1) as set forth in at least one of the preceding claims,
**characterised in that** the orientation mask (18) is of such a height that products (2), which are ejected by means of the first feed belt (6) into a compartment of the orientation mask (18), at least partially hit against a wall of a compartment (26) and can be brought into contact therewith.

12. Apparatus (1) as set forth in at least one of the preceding claims,
**characterised in that** the orientation mask (18) has a plurality of compartments (26) which are provided in a solid material, in particular plastic or metal.

13. Apparatus (1) as set forth in at least one of the preceding claims,
**characterised in that** the orientation mask (18) is arranged by means of a holding device (20) on a frame structure, in particular of the feed belt (6, 8), and is preferably releasably fixed.

14. Apparatus (1) as set forth in claim 13,
**characterised in that** the holding device (20) is so adapted that the orientation mask (18) can be fixed in a plurality of positions in the direction of the X-axis and/or the Y-axis.

15. Apparatus (1) as set forth in at least one of the preceding claims,
**characterised by** an electronic control device (10) which is designed and adapted to control drives of the first and second feed belts (8) in such a way that a plurality of different groups (4) of products (2) can be formed on the second feed belt (8) and transported into the packaging (16).

## Revendications

1. Procédé d'agencement groupé et d'alignement de denrées (2) alimentaires individuelles, avec les étapes :
- d'amenée d'une denrée (2) alimentaire au moyen d'une première bande d'amenée (6) pour transporter les denrées (2) en direction d'un axe X,
- de largage de la denrée (2) de la première bande d'amenée (6) sur une position sur l'axe X sur une deuxième bande d'amenée (8) pour transporter les denrées en direction d'un axe Y,
- de transport de la denrée (2) au moyen de la deuxième bande d'amenée (8) le long de l'axe Y en direction d'un masque d'alignement (18) agencé au-dessus de la deuxième bande d'amenée (8), dans lequel la deuxième bande d'amenée (8) pour transporter les denrées en direction du masque d'alignement (18) exécute un court déplacement arrière en direction du masque d'alignement (18) puis exécute un déplacement vers l'avant dans la direction opposée et en direction de l'axe Y,
dans lequel le masque d'alignement est réalisé et est mis au point de telle sorte que la denrée (2) vient en contact avec le masque d'alignement (18) et est alignée au moins en partie par rapport à l'axe X et/ou l'axe Y sur la deuxième bande d'amenée (8), dans un système de coordonnées donc dans la direction X et/ou direction Y, dans lequel la direction X est une première direction et la direction Y est une deuxième direction,
- de poursuite du transport de la denrée (2) alignée au moyen de la deuxième bande d'amenée en direction de l'axe Y.

2. Procédé selon la revendication 1,
dans lequel les denrées (2) alimentaires, lesquelles sont transportées par la première bande d'amenée (6) en direction d'un axe X pour les larguer de la première bande d'amenée (6) sur une deuxième bande d'amenée (8) et les aligner sur celle-ci au moins en partie par rapport à l'axe X et/ou l'axe Y, sont des denrées (2) empilées comme des piles de boulettes/galettes.

3. Procédé selon la revendication 1 ou 2, avec les étapes
d'amenée les unes après les autres de plusieurs denrées (2) au moyen de la première bande d'amenée (6),
de largage des plusieurs denrées (2) sur la deuxième bande d'amenée (8) sur plusieurs différentes positions X sur l'axe X de manière adjacente au masque d'alignement (18), qui présente plusieurs compartiments (26), qui sont agencés respectivement sur différentes positions X le long de l'axe X ou d'un axe parallèle à celui-ci si bien que les denrées (2) larguées forment une rangée de plusieurs denrées (2) sur la deuxième bande d'amenée (8),
de court transport des plusieurs denrées (2) au moyen de la deuxième bande d'amenée le long de l'axe Y en direction du masque d'alignement (18) si bien que les denrées (2) viennent en contact au moins en partie avec le masque d'alignement (18) et sont alignées au moins en partie par rapport à l'axe X et/ou l'axe Y sur la deuxième bande d'amenée (8),
de poursuite du transport des denrées (2) alignées en direction de l'axe Y de préférence en modifiant la direction de déplacement de la deuxième bande d'amenée (8) .

4. Procédé selon au moins l'une quelconque des revendications précédente,
**caractérisé en ce que**
plusieurs denrées (2) empilées sont larguées les unes après les autres côte à côte dans respectivement un compartiment (26) en forme de U du masque d'alignement (18) si bien que les denrées (2) empilées sont agencées à une distance les unes par rapport aux autres sur la deuxième bande d'amenée (8) et forment une rangée,
- de court déplacement arrière de la rangée de denrées (2) empilées en direction du masque d'alignement (18), ce qui permet de déplacer les denrées (2) empilées dans l'arrondi des compartiments (26) en forme de U pour y être alignées avec un positionnement précis,
- de court déplacement vers l'avant de la rangée alignée de denrées (2) empilées,
- de formation d'une autre rangée de denrées (2) empilées en les larguant les unes après les autres dans les compartiments (26) du masque d'alignement (18),
- de court redéplacement arrière des denrées (2) en direction du masque d'alignement (18), et ce jusqu'à ce que la première rangée de denrées (2) alignée au préalable se soit déplacée contre l'autre rangée de denrées (2) également alignée si bien que les deux rangées sont sensiblement non espacées l'une par rapport à l'autre,
- de formation éventuellement d'une autre rangée de denrées (2) empilées sur la deuxième bande d'amenée (8) et d'alignement et d'agencement adjacent de l'autre rangée sur les rangées déjà agencées au préalable étroitement côte à côte,
- puis de déplacement d'un groupe (4) aligné de plusieurs denrées (2) empilées.

5. Procédé selon au moins l'une quelconque des revendications précédentes,
**caractérisé en ce qu'**un premier groupe (4) est fabriqué à partir de plusieurs rangées étroitement espacées,
de transport du groupe (4) dans la direction Y au moyen de la deuxième bande d'amenée (8),
de fabrication d'un autre groupe (4) à partir de denrées (2) sur la deuxième bande d'amenée (8), qui est agencé à une distance par rapport au premier groupe (4) formé au préalable sur la bande Y,
éventuellement de formation ultérieure d'autres groupes (4) à partir de denrées (2), qui sont formés sur la deuxième bande d'amenée (8) dans plusieurs rangées de denrées (2) agencées étroitement les unes contre les autres.

6. Procédé selon au moins l'une quelconque des revendications précédentes,
**caractérisé par**
l'amenée d'un groupe (4) de denrées (2) empilées pour former un emballage (16) au moyen de la deuxième bande d'amenée (8) en direction de l'axe Y, et
le dépôt du groupe (4) de denrées (2) empilées dans un emballage (16).

7. Dispositif (1) pour agencer de manière groupée et aligner des denrées (2) alimentaires, avec :
- une première bande d'amenée (6) pour amener diverses denrées (2) alimentaires dans une première direction de déplacement en direction d'un axe X et pour larguer des denrées (2) sur une deuxième bande d'amenée (8),
- une deuxième bande d'amenée (8) pour amener des denrées (2) alimentaires reçues dans une deuxième direction de déplacement le long d'un axe Y, et
- un système de commande (10) électronique, qui est mis au point et est réalisé pour commander des entraînements de la première et de la deuxième bande d'amenée (8) de telle sorte qu'une pluralité de divers groupes (4) de denrées (2) peuvent être réalisés sur la deuxième bande d'amenée (8) et peuvent être transportés dans l'emballage (16),
**caractérisé en ce que**
- le dispositif présente un masque d'alignement (18), lequel est agencé au-dessus de la deuxième bande d'amenée (8) et est mis au point et est réalisé de telle sorte que des denrées (2) peuvent être introduites par la deuxième bande d'amenée (8) dans au moins un compartiment (26) du masque d'alignement (18) et peuvent être alignées sur la deuxième bande d'amenée (8), et
- le système de commande (10) électronique est mis au point et est réalisé pour commander des entraînements de la première et de la deuxième bande d'amenée (6, 8) selon le procédé de la revendication 1.

8. Dispositif (1) selon la revendication 7,
**caractérisé en ce que** le masque d'alignement (18) présente une pluralité de compartiments (26).

9. Dispositif (1) selon la revendication 7,
**caractérisé en ce que** le masque d'alignement (18) présente plusieurs compartiments (26), qui présentent une forme se rétrécissant de l'extérieur vers l'intérieur des flancs ou des parois, lesquels réalisent dans une vue une forme en U ou une forme en V.

10. Dispositif (1) selon la revendication 9,
**caractérisé en ce que** plusieurs compartiments (26) sont agencés de manière espacée les uns par rapport aux autres sensiblement dans une rangée en direction de l'axe X.

11. Dispositif (1) selon au moins l'une quelconque des revendications précédentes,
**caractérisé en ce que** le masque d'alignement (18) présente une hauteur telle que des denrées (2) larguées au moyen de la première bande d'amenée (6) dans un compartiment du masque d'alignement (18) viennent buter au moins en partie contre une paroi d'un compartiment (26) et peuvent être amenées en contact avec celle-ci.

12. Dispositif (1) selon au moins l'une quelconque des revendications précédentes,
**caractérisé en ce que** le masque d'alignement (18) présente plusieurs compartiments (26) réalisés dans un matériau massif.

13. Dispositif (1) selon au moins l'une quelconque des revendications précédentes,
**caractérisé en ce que** le masque d'alignement (18) est agencé au moyen d'un système de maintien (20) sur un châssis de la bande d'amenée (6, 8) et est fixé de manière amovible.

14. Dispositif (1) selon la revendication 13,
**caractérisé en ce que** le système de maintien (20) est réalisé de telle sorte que le masque d'alignement (18) peut être bloqué dans plusieurs positions en direction de l'axe X et/ou de l'axe Y.

15. Dispositif (1) selon au moins l'une quelconque des revendications précédentes,
**caractérisé par** un système de commande (10) électronique, qui est mis au point et est réalisé pour commander des entraînements de la première et de la deuxième bande d'amenée (8) de telle sorte qu'une pluralité de différents groupes (4) de denrées (2) peuvent être réalisés sur la deuxième bande d'amenée (8) et peuvent être transportés dans l'emballage (16).
